# EUROPÄISCHE PATENTSCHRIFT

(11) **EP 1 419 373 B1**
(45) Veröffentlichungstag und Bekanntmachung des Hinweises auf die Patenterteilung: **22.03.2006**
(21) Anmeldenummer: 02754862.7
(22) Anmeldetag: 10.07.2002
(51) Int. Cl.: G01N 15/02, G01N 1/22

(54) **VORRICHTUNG ZUR BESTIMMUNG VON AEROSOL-PARTIKELGRÖSSENVERTEILUNGEN**
DEVICE FOR DETERMINING AEROSOL PARTICLE SIZE DISTRIBUTIONS
DISPOSITIF DE DETERMINATION DE LA REPARTITION GRANULOMETRIQUE D'AEROSOLS

(30) Priorität: 27.07.2001 DE 10136555
(43) Veröffentlichungstag der Anmeldung: 19.05.2004
(73) Patentinhaber: Boehringer Ingelheim International GmbH, 55216 Ingelheim am Rhein (DE)
(72) Erfinder: HOCHRAINER, Dieter, 57392 Oberkirchen (DE); BOECK, Georg, 55122 Mainz (DE); HOELZ, Hubert, 55413 Oberheimbach (DE); SCHEFFLER, Christian, 55218 Ingelheim (DE); KREHER, Christoph, 55218 Ingelheim (DE)
(86) Internationale Anmeldenummer: PCT/EP2002/007674
(87) Internationale Veröffentlichungsnummer: WO 2003/012402

(56) Entgegenhaltungen:
- WO-A-91/10123
- GB-A- 2 340 932
- US-A- 3 809 478
- US-A- 5 250 186
- US-A- 5 957 124
- DOLOVICH M: "Measurement of Particle Size Characteristics of Metered Dose Inhaler (MDI) Aerosols" JOURNAL OF AEROSOL MEDICINE, Bd. 4, Nr. 3, 1991, Seiten 251-263, XP009002203
- STEIN S W : "Size distribution measurements of metered dose inhalers using Andersen Mark II cascade impactors" INTERNATIONAL JOURNAL OF PHARMACEUTICS, Bd. 186, 1999, Seiten 43-52, XP002224771
- KIPPAX P ET AL: "Analysis of dry powders aerosols using laser diffraction" BRITISH PHARMACEUTICAL CONFERENCE 2001 ABSTRACT BOOK, 23. bis 26. September 2001, Seite 121. XP002224772

## Beschreibung

Die Erfindung betrifft eine Vorrichtung zur Durchführung optimierter Verfahren zur Bestimmung der Größenverteilung der in einem Aerosol enthaltenen Partikel, insbesondere der Partikel einer Arzneistoff-Formulierung.

Im Rahmen der Erfindung ist unter dem Begriff "Arzneistoff der wirksame Bestandteil eines Arzneimittels zu verstehen, der üblicherweise auch als Pharmakon oder Wirkstoff bezeichnet wird.

Der Begriff "Arzneistoff-Formulierung" ist weit auszulegen, so dass hierunter insbesondere auch Lösungs-Formulierungen, Suspensions-Formulierungen und Pulver-Formulierungen zu verstehen sind. Dabei ist der Arzneistoff bei einer Lösungs-Formulierung in einem Lösungsmittel gelöst, wohingegen bei einer Suspensions-Formulierung und Pulver-Formulierung der Arzneistoff in fester Form vorliegt. Während er bei einer Suspensions-Formulierung mit einem Suspensionsmittel vermischt vorliegt und in diesem Suspensionsmittel der Arzneistoff in Form von Schwebeteilchen enthalten ist, weist eine Pulver-Formulierung kein Lösungsmittel bzw. Suspensionsmittel in diesem Sinne auf, sondern liegt gewissermaßen in Reinform als pures Pulver vor.

Für die Bereitstellung und Dosierung einer Lösungs-Formulierung dient ein Zerstäuber bzw. Vernebler, vorzugsweise ein Vernebler, bei dem eine Menge von weniger 100 ml, bevorzugt weniger als 50 ml, vorzugsweise weniger als 20 ml der Formulierung bereitgestellt werden.

Eine derartige Vorrichtung zur treibgasfreien Verneblung einer dosierten Menge der genannten Arzneistoff Formulierungen, wird beispielsweise in der internationalen Patentanrneldung WO 91/14468 "Atomizing Device and Method" und auch in der WO 97/12687 - Figur 6a und 6b - ausführlich beschrieben. In einem solchen Vemebler wird eine Arzneistoff-Formulierung mittels hohem Drucks von bis zu 500 bar in ein Aerosol eingebracht, wobei die eingebrachten Partikel einen Durchmesser von weniger als 100 µm, bevorzugt weniger als 20 µm aufweisen.

Neben diesem Gerät können in dem erfindungsgemäßen Verfahren auch andere aus dem Stand der Technik bekannte Inhalatoren eingesetzt werden, wie z.B. MDI (meterd dose inhaler) oder Pulverinhalatoren wie der der Marke HandiHaler®.

In solchen Verneblern werden die Formulierungen in einem Reservoir gelagert, weshalb es notwendig ist, dass die verwendeten Formulierungen eine ausreichende Lagerstabilität aufweisen.

Die Messung von Aerosol-Partikelgrößenverteilungen ist in der pharmazeutischen Industrie zur Beurteilung der Depositionscharakteristik im Lungen- und Bronchialbereich unerlässlich, wie im Folgenden gezeigt wird.

Bei einer Vielzahl von Anwendungsfällen, insbesondere bei Erkrankungen im Lungen- und Bronchialbereich wird der Arzneistoff als inhalierfähiger Arzneistoff (Inhalativa) zur Verfügung gestellt. Dabei wird eine Arzneistoff-Formulierung zu einem Aerosol zerstäubt. Das so erzeugte Aerosol kann dann in einem Trägermedium, z.B. Luft, transportiert werden.

Beispielsweise wird bei Verwendung eines Asthma-Sprays eine in einem Zerstäuber bevorratete Arzneistoff-Formulierung durch kurzes Betätigen mittels einer Düse fein zerstäubt und in die vom Patienten eingeatmete Umgebungsluft, die als Trägermedium dient, eingebracht. Die mit der Arzneistoff Formulierung angereicherte Luft bildet ein Aerosol, welches inhaliert wird.

Inhalativa erfordern eine bestimmte Erscheinungsform des Arzneistoffes. Zum Einsatz kommen in der Regel mikronisierte Arznei- bzw. Wirkstoffe in fester Form. Grundsätzlich kann der Arzneistoff aber in flüssiger oder fester Form - beispielsweise als Pulver - vorliegen, wobei feste Partikel nicht in dem Lösungsmittel im herkömmlichen Sinne in Lösung gehen bzw. in purer Form vorliegen.

Um die Inhalierfähigkeit des Arzneistoffes zu gewährleisten, werden hohe Anforderungen an die Teilchengröße, die Teilchengrößenverteilung, die Morphologie, die Stabilität und das Fließverhalten gestellt.

In der Regel gelangt nicht die gesamte inhalativ verabreichte Dosis des Arzneistoffes in die Lunge, sondern nur ein Teil dieser Dosis. Maßgeblichen Einfluss auf den Anteil des Arzneistoffes, der tatsächlich in die Lunge gelangt, hat die Teilchengröße. Aus diesem Grunde werden Teilchen bevorzugt, die einen Durchmesser kleiner 20 µm, vorzugsweise kleiner 5 µm und größer 0,3 µm, aufweisen.

Der Durchmesser der Teilchen sollte sich im angegebenen Fenster befinden und darüber hinaus eine möglichst enge Größenverteilung aufweisen. Größere Teilchen werden beim Einatmen bereits in den oberen Luftwegen abgeschieden, wohin gegen kleinere Teilchen nicht in der Lunge deponiert werden und diese beim Ausatmen wieder verlassen.

Unter Teilchendurchmesser im Rahmen der vorliegenden Erfindung ist der aerodynamische Partikeldurchmesser zu verstehen, wobei dieser definiert ist als Äquivalentdurchmesser einer Kugel der Dichte von 1g/cm³, die die gleiche Sedimentationsgeschwindigkeit in Luft besitzt, wie das untersuchte Teilchen.

Vor diesem Hintergrund wird leicht verständlich, dass die pharmazeutische Industrie ein Bedürfnis an einem Verfahren hat, welches die Bestimmung der Partikelgrößenverteilung von Aerosolen ermöglicht.

Zum anderen fordert aber auch der Gesetzgeber, insbesondere die Gesundheitsbehörden, gesicherte Kenntnisse über die tatsächlich verabreichte Dosis, d.h. über den Teil, der insgesamt inhalativ verabreichten Dosis, der im Lungen- und Bronchialbereich deponiert wird.

Zudem hat neben der absolut verabreichten Menge die Größenverteilung in der Art Einfluss auf die Bioverfügbarkeit des Arzneistoffs, dass bei gleichen absoluten Mengen viele kleine Partikel ein andere Bioverfügbarkeit vorliegt als bei wenigen großen Partikeln.

Nach dem Stand der Technik kommen drei konventionelle Verfahren zur Bestimmung der Partikelgrößenverteilung zum Einsatz.

Einen guten Überblick verschafft hierüber Journal of Aerosol Medicine, 4(3), S. 251-263, 1991.

Eine erste, weit verbreitete Methode zur Bestimmung der Partikelgrößenverteilung ist die so genannte Impaktionsmethode mittels des Andersen-Kaskadenimpaktors. Der Kaskadenimpaktor ist eine standardisierte Vorrichtung zur Durchführung eines standardisierten Messverfahrens, der so genannten Impaktionsmethode, wobei sowohl das Verfahren als auch die Vorrichtung ausführlich in Arzneibüchern beschrieben sind (s. auch European Pharmacopoeia, 3rd Edition, Supplement 2001, 2.9.18 Preparation for inhalation).

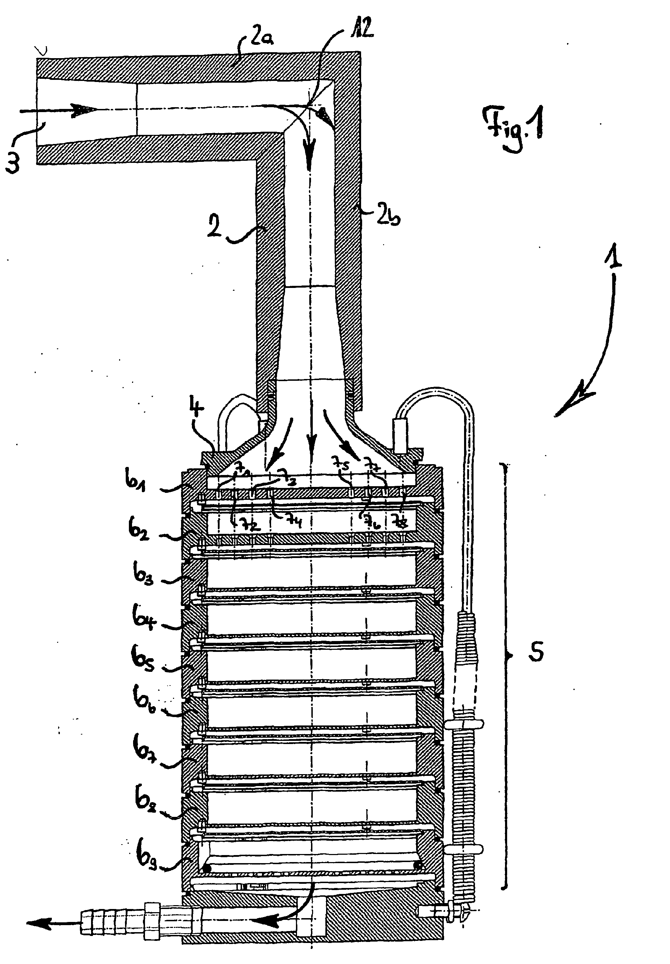

Figur 1 zeigt den Andersen-Kaskadenimpaktor schematisch in der Seitenansicht und z.T. geschnitten (a.a.O. Seite 122). Der Kaskadenimpaktor (1) wird mit dem zu untersuchenden Aerosol über die Eintrittsöffnung (3) einer rechtwinkligen, rohrförmigen Zuführung (2) beaufschlagt.

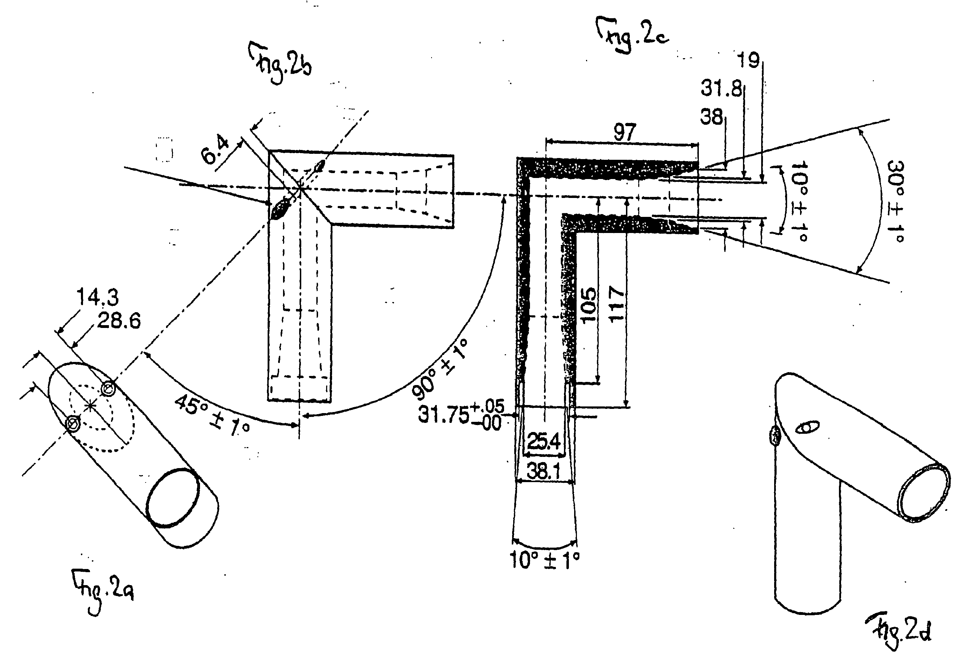

Bei der Zuführung (2) handelt es sich um ein genormtes Bauteil (a.a.0. Seite 120), das auch als USP-Throat bezeichnet wird und den Mund-Rachen-Halsraum des Menschen simuliert. Zur Veranschaulichung des USP-Throats ist die Figur 2.9.17-7 (industion port) in den Figuren 2a bis 2d wiedergegeben.

Figur 2d zeigt den USP-Throat in einer perspektivischen Ansicht, während die Figuren 2a bis 2c dazu dienen, die vorgegebenen Maße aufzuzeigen. Die Figuren 2a bis 2d sollen insgesamt einen Eindruck von dem USP-Throat vermitteln und verdeutlichen, dass es sich um ein äußerst detailliert beschriebenes Bauteil handelt, welches dem Hersteller bzw. Verwender keinerlei Freiheitsgrade lässt.

Ähnlich wie die dem Patienten verabreichte Arzneistoff-Formuliemng mit der eingeatmeten Umgebungsluft, mit der zusammen sie ein Aerosol bildet, über den Mund- und Rachenraum in die Luftröhre und von dort in die Lunge zu den Bronchien geleitet wird, wird auch beim Andersen-Kaskadenimpaktor (1) das Aerosol auf einem gekrümmten Strömungsverlauf über den nicht geradlinigen USP-Throat (2) dem eigentlichen Probensammler (5) zugeführt.

Der Anatomie des Menschen entsprechend wird die Aerosol-Strömung über die Eintrittsöffnung in ein erstes Teilstück (2a) des USP-Throats (2) eingeleitet und anschließend in ein zweites Teilstück (2b), welches mit dem ersten Teilstück (2a) verbunden ist und im wesentlichen senkrecht zu diesem angeordnet ist, umgeleitet.

Die Partikel des Aerosols sind aufgrund der nicht geradlinigen Strömungsführung und ihrer daraus resultierenden, gekrümmten Strömungsbahn radial nach außen gerichteten Zentrifugalkräften ausgesetzt. Übersteigt die Masse der Aerosol-Partikel eine bestimmte Größe, können diese Partikel nicht mehr der umgelenkten Strömung folgen, sondern werden an der Wand des USP-Throats (2) abgeschieden.

In Figur 1 dargestellt ist die Flugbahn (12) eines Partikels, der dem Strömungsverlauf nicht folgen kann und an der Innenwand des zweiten Teilstückes (2b) des USP-Throats (2) aufschlägt bzw. abgeschieden wird.

Dies ist im Prinzip die erste Stufe des Andersen-Kaskadenimpaktors, welche die Umlenkung des vom Patienten eingeatmeten Aerosols im Rachenbereich und die damit verbundene Ablagerung von Arzneistoff-Formulierung im Rachenbereich simuliert.

Der USP-Throat (2) ist über ein Verbindungsstück (4), welches auch genormt ist (a.a.O. Seite 123), mit dem eigentlichen Probensammler (5) verbunden. Die Aerosol-Strömung wird im Verbindungsstück (4) aufgeweitet und der ersten Stufe bzw. Kaskade (6₁) des Kaskadenimpaktors (1) zugeführt.

Bei dem Kaskadenimpaktor (1) handelt es sich um einen im wesentlichen zylindrischen Behälter, der modular aufgebaut ist und von oben nach unten durchlaufen wird, wobei das eingespeiste Aerosol mehrere Stufen, die so genannten Kaskaden, durchläuft und eine Abscheidung der im Trägermedium befindlichen Aerosol-Partikel von grob zu fein bzw. von schwer zu leicht stattfindet.

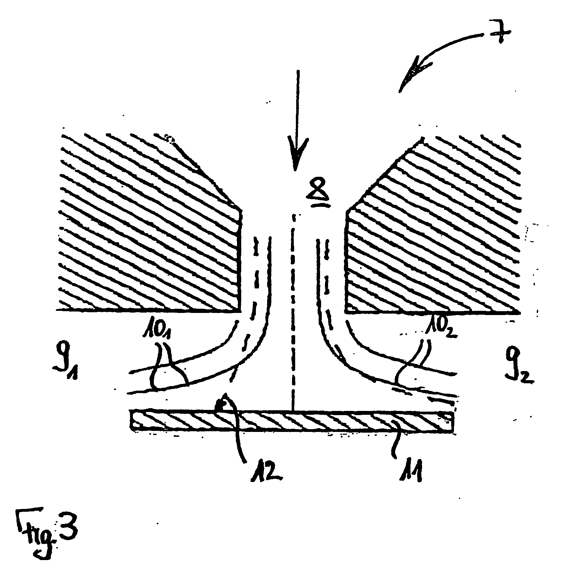

Jede Stufe bzw. Kaskade (6₁, 6₂, 6₃, 6₄, 6₅, 6₆, 6₇, 6₈, 6₉) umfasst mehrere Impaktor-Düsen (7₁, 7₂, 7₃, 7₄, 7₅, 7₆, 7₈). Eine solche Impaktor-Düse (7) ist schematisch in der Seitenansicht und geschnitten in Figur 3 dargestellt.

Das Aerosol, mit dem die Düse (7) beaufschlagt wird, wird in der Eintrittsöffnung (8) der Düse (7) durch eine definierte Verengung des Querschnitts des Düseneintritts gezielt beschleunigt und anschließend mit Hilfe einer Impaktor-Platte (11) umgelenkt. Ähnlich wie bei der Strömungsumlenkung im USP-Throat (2) kommt es auch hier infolge der gekrümmten Bewegungsbahn und den infolgedessen an den Teilchen angreifenden Zentrifugalkräften zu einer Abscheidung von Teilchen einer gewissen Masse.

Figur 3 zeigt die Stromlinien (10₁, 10₂) der Aerosol-Strömung, denen die leichteren Teilchen im wesentlichen folgen, ohne mit der Impaktor-Platte (11) zu kollidieren. Ebenfalls in Figur 3 dargestellt ist die Flugbahn (12) eines infolge seiner zu großen Masse auf die Impaktor-Platte (11) aufschlagenden Teilchens.

Die Düse (7) dient gewissermaßen als Filter, um Teilchen, die eine vorgegebene Masse überschreiten, aus der Aerosol-Strömung herauszufiltern und auf der Impaktor-Platte (11) zu deponieren. Aufgrund der Tatsache, dass es sich um eine standardisierte Vorrichtung und ein standardisiertes Verfahren handelt, liegen genaue Informationen über den Zustand im Bereich der Düse vor. Man hat für jede Kaskade genaue Kenntnisse darüber, welche Masse m_{ab} die hier auf der Impaktor-Platte (11) deponierten Teilchen aufweisen.

Nach Durchlaufen der ersten Stufe bzw. Kaskade (6₁) und einer ersten Abscheidung schwerer Teilchen durchläuft das Aerosol, wie in Figur 1 dargestellt, acht weitere Kaskaden (6₂ bis 6₉), wobei die Geometrie der Impaktor-Düsen (7) sich von Stufe zu Stufe ändert bzw. verfeinert und damit ein Herausfiltern immer feinerer, d.h. leichterer Teilchen erlaubt.

Die in einer ganz bestimmten Stufe abgeschiedenen Aerosol-Partikel weisen somit eine ganz bestimmte Masse, welche in einem von einem oberen und einem unteren Grenzwert begrenzten, sehr engen Fenster liegt, auf.

Als letzte Stufe - in Figur 1 nicht dargestellt - kann ein Filter vorgesehen werden, der sämtliche Teilchen, die zuvor nicht abgeschieden wurden, sammelt, und so - zusammen mit den Impaktor-Platten (11) - eine Bestimmung der absoluten Gesamtmasse der dem Impaktor zugeführten Arzneistoff-Formulierung ermöglicht.

Nachdem das Aerosol den Impaktor durchlaufen hat, werden die Impaktor-Platten (11) jeder Kaskade entnommen und einer umfangreichen Analyse unterzogen. Dabei steht die Ermittlung der Partikelgrößenverteilung im Vordergrund. Theoretisch könnte zunächst für jede Impaktor-Platte die Gesamtmasse der auf ihr eingeschlagenen bzw. deponierten Arzneistoff-Formulierung ermittelt werden. Mit Hilfe der Kenntnis der Masse m_{ab} der abgeschiedenen Partikel in jeder Stufe könnte dann auf die Anzahl der abgeschiedenen Partikel in jeder Kaskade geschlossen werden.

In der Praxis hat sich aber gezeigt, dass die so ermittelten Messwerte nicht in engen Grenzen reproduzierbar sind. Versuche haben ergeben, dass ein Teil der Arzneistoff-Formulierung während des Messvorganges verdunstet.

Das Trägermedium kann aufgrund seines nicht gesättigten Zustandes weitere Flüssigkeit aufnehmen, weshalb eine Abgabe an Flüssigkeit aus den Partikeln an das Trägermedium infolge Verdunstung erfolgen kann und in der Regel auch erfolgt.

Die Verdunstung der Partikeltröpfchen führt zu einer Veränderung der Partikelmasse jedes einzelnen Partikels und damit zu einer Verringerung des Teilchendurchmessers und somit zu einem infolge Verdunstung verfälschten Messergebnis.

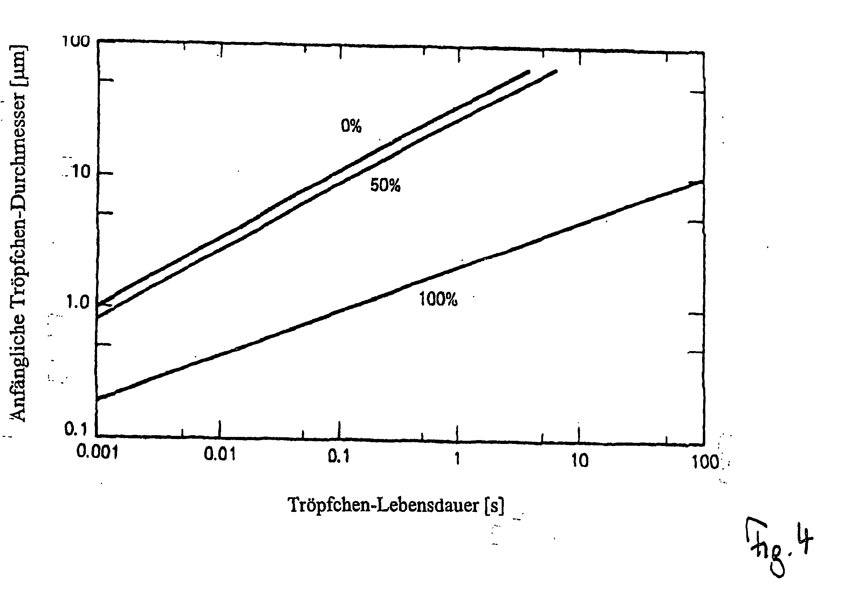

Dass die Berücksichtigung des Effektes der Verdunstung auch in anderer Hinsicht wichtig sein kann, belegt Figur 4, welche die Lebensdauer eines Wassertropfens in Abhängigkeit vom anfänglichen Tröpfchen-Durchmesser für verschiedene relative Luftfeuchten (0%, 50%, 100%) bei 20°C zeigt (William C. Hinds *"Aerosol Technology - Properties, Behavior, and Measurement of airborne Particles",* Seite 270, ISBN 0-471-08726-2).

Kleine Partikel haben eine geringe Lebensdauer und können während der Messung verdunsten, so dass sie im Rahmen der Partikel-Größenverteilung gar keine Berücksichtigung mehr finden.

Aus den genannten Gründen reicht es nicht, nur die Gesamtmasse der auf jeder Impaktor-Platte deponierten Arzneistoff Formulierung zu ermitteln. Zudem muss die Arzneistoff-Formulierung jeder Impaktor-Platte eine Analyse unterzogen werden, um die Konzentrationen der Inhaltsstoffe zu bestimmen. Durch eine teilweise Verdunstung des Lösungs- bzw. Suspensionsmittels kommt es im Aerosoltropfen zu einer Aufkonzentrierung des Arzneistoffs und der anderen Inhaltsstoffe.

Aufgrund des Grades der Aufkonzentrierung des Arzneistoffes werden im Rückschluss Kenntnisse über den Anteil des Partikels gewonnen, der verdunstet ist. Die Berücksichtigung dieses verdunsteten Anteils dient bei der Bestimmung der Partikelgrößenverteilung als Korrektiv und führt zu einer anderen Gesamtmasse der auf jeder Impaktor-Platte deponierten Arzneistoff-Formulierung.

Die auf den Impaktor-Platten (11) abgeschiedene Arzneistoff-Formulierung kann beispielsweise mit dem HPLC-Verfahren auf ihre Zusammensetzung hin analysiert werden.

Weitere Versuche haben ergeben, dass trotz der Berücksichtigung der Verdunstung auf die o.g. Art, die Messergebnisse von Messung zu Messung immer noch variieren und eine weitere Steigerung der Reproduzierbarkeit wünschenswert ist. Weitere Untersuchungen haben gezeigt, dass die alleinige massenmäßige Berücksichtigung des verdunsteten Anteils der Aerosol-Partikel nicht ausreichend ist.

Enthält eine flüssige Arzneimittelformulierung Säuren oder Basen zum Einstellen eines pH-Wertes, kommt es infolge der Verdunstung während der Messung zu einer Erhöhung oder Erniedrigung des pH-Wertes. In Folge dessen kommt es bei pH-Wert-empfindlichen Wirkstoffen zu Zersetzungen, so dass die Analyse der Konzentration des Wirkstoffs in den abgeschiedenen Fraktionen nicht mehr der tatsächlich im Aerosoltropfen ursprünglich vorhanden gewesenen Konzentration entspricht. Diese Vorgehensweise stößt also an ihre Grenzen und ist nur bedingt als Korrektiv hinsichtlich des Verdunstungseffekts tauglich. Eine Arzneistofflösung oder Suspension könnte beispielsweise neben dem Arzneistoff A und Wasser als Lösungsmittel, eine Säure X als Hilfsstoff enthalten. Verdunstet ein Teil des Lösungsmittels Wasser, kommt es zu einer Erniedrigung des pH-Wertes und das Teilchen wird zunehmend sauer, weshalb eine Zersetzung des Arzneistoffs eingeleitet wird. Analoges gilt, wenn die Arzneirnittelformulierung eine Base enthält. -

Die Analytik, d.h. die Auswertung der mit dem Kaskadenimpaktor vorgenommenen Messungen sind außerordentlich zeit- und arbeitsintensiv. Die gesamte Apparatur wird zerlegt, um an die Vielzahl von Impaktor-Platten (11) zu gelangen. Jede Impaktor-Platte wird gewogen und analysiert. So können in der Regel nur wenige Messungen pro Tag durchgeführt werden, wobei zwischen der eigentlichen Messung und dem Vorliegen der Messergebnisse eine erhebliche Zeitspanne liegt.

Ein anderes Verfahren zur Bestimmung der Aerosol-Partikelgrößenverteilung, welches sich als weitaus weniger zeit- und arbeitsintensiv als die Impaktormethode erweist, ist das so genannte Laserbeugungsverfahren. Die Laserbeugungsmethode erfordert im Gegensatz zur Impaktormethode keine aufwendige Analytik und gestattet es infolgedessen wesentlich schneller zu arbeiten und wesentlich schneller auf die Ergebnisse der Messung zuzugreifen.

Die DIN-ISO 13320-1 (First Edition 1999-11-01) beschreibt Laserbeugungsverfahren. Dabei wird senkrecht zu einer Aerosol-Strömung - genau genommen liegt keine Strömung vor sondern eine eingespritzte Aerosol-Wolke - mittels eines Lasers paralleles Licht ausgesendet. Die in der Aerosol-Wolke enthaltenen Teilchen stellen für die Laserstrahlen ein Hindernis dar, so dass die Lichtstrahlen an den Teilchen gebeugt werden. Das auf der gegenüberliegenden Seite des einfallenden Laserstrahles austretende Streulicht, welches durch die Beugung der Laserstrahlen an den Teilchen generiert wird, ergibt ein kreisförmiges Interferenzmuster mit konzentrischen Ringen, und wird einem Detektor, in der Regel einem Halbleiter-Detektor, zugeführt. Die üblichen Auswerteverfahren dieses Interferenzmusters sind die Mie-Streuung oder die Fraunhofer-Methode.

Während dem Kaskadenimpaktor die zu untersuchende Aerosol-Strömung in der Regel über einen USP-Throat kontinuierlich zugeführt wird, erfolgt die Bestimmung der Aerosol-Partikelgrößenverteilung mittels des Laserbeugeverfahrens nach dem Stand der Technik an der freien Strömung, d.h. in der Regel an einem einmaligen, keulenförmigen, inhomogenen und deshalb nicht reproduzierbaren Dosierstrahl.

Als nachteilig bei der Laserbeugungsmethode erweist sich - wie bei der Impaktormethode - der Umstand, dass ein Teil der Aerosol-Partikel verdunstet und so das Messergebnis verfälscht wird. Obwohl die Vermessung des Aerosols mittels des Laserbeugungsverfahrens wesentlich schneller durchzuführen ist als die Impaktomethode, bei der die Aerosol-Strömung einen langen Strömungsweg zu durchströmen hat, spielt auch bei dem Laserbeugungsverfahren der Verdunstungseffekt eine Rolle.

Gerade bei Aerosolen, bei denen die Partikel in Form von flüssigen oder teilweise flüssigen Tröpfchen vorliegen, besteht die Gefahr einer zumindest teilweisen Verdunstung der flüssigen Aerosol-Partikel, so dass die beschriebenen Effekte besonders bei Lösungs-Formulierungen und Suspensions-Formulierungen bedeutsam sind.

Der in Figur 4 dargestellte, funktionale Zusammenhang und die Notwendigkeit seiner Berücksichtigung wurden experimentell verifiziert.

Versuche mit dem Kaskaden-Impaktor bei verschiedenen relativen Luftfeuchten haben gezeigt, dass Messungen zur Aerosol-Partikelgrößenverteilung mit dem Impaktor am sinnvollsten bei hohen relativen Luftfeuchten durchgeführt werden sollten, da bei zu geringen Luftfeuchten der Verdunstungs-Effekt die Messergebnisse maßgeblich beeinflusst und schließlich hohe Luftfeuchten auch den tatsächlichen Gegebenheiten im Mund-Hals-Rachenraum des Menschen entsprechen. Es muss berücksichtigt werden, dass mit Hilfe der beschriebenen Verfahren die Depositionscharakteristik im Lungen- und Bronchialbereich ermittelt werden soll, weshalb eine Simulierung des hier vorliegenden Zustandes - Druck Temperatur, Luftfeuchte - angestrebt werden sollte.

Ein drittes Verfahren für die Vermessung von Aerosolen ist die Streulichtmethode. Ein solches Verfahren bespricht Dr.-Ing. H. Umhauer in VDI Berichte 232(1975),Seite 101 ff. *"Ermittlung von Partikelgrößenverteilung in Aerosolströmungen hoher Konzentration mit Hilfe der Streulichtmethode".*

Dabei eignet sich dieses Verfahren zur Messung feinster Teilchen mit einer Nachweisgrenze, die weit im submikroskopischen Bereich liegen kann. Das Messverfahren ist als zählendes Verfahren eingerichtet, das die Partikelgröße ermittelt und die einzelnen Teilchen zählt, so dass sowohl qualitative als auch quantitative Aussagen hinsichtlich der Partikel möglich sind.

Nachteilig an der Streulichtmethode ist, dass eine Abgrenzung eines kleinen Messvolumens vorgenommen werden muss - beispielsweise mit einer Kantenlänge von 100µm -, weil sich im Messvolumen immer nur ein Teilchen aufhalten darf, wenn eindeutige Streusignale erhalten werden sollen. Die Apparatur und ihre Kalibrierung ist entsprechend aufwendig. In der Praxis hat sich die Streulichtmethode als die dem Laserbeugungsverfahren unterlegene Meßmethode erwiesen, da sie die unzuverlässigeren Ergebnisse liefert.

Des Weiteren leistet die Streulichtmethode wie das Laserbeugungsverfahren an dem Verdunstungs-Effekt und den damit zusammenhängenden Nachteilen.

Wie bereits bei dem konventionellen Laserbeugungsverfahren, wird auch die Streulichtmethode an einer freien Aerosol-Strömung durchgeführt.

Zusammenfassend lässt sich bezüglich des Standes der Technik festhalten, dass der Kaskadenimpaktor aufgrund seiner aufwendigen Analytik sehr zeit- und kostenintensiv ist, während die Streulichtmethode und ebenso das Laserbeugungsverfahren zwar vergleichsweise schnelle Verfahren bieten, aber ebenso wie der Kaskadenimpaktor unter dem Verdunstungseffekt leiden.

Vor diesem Hintergrund ist es die Aufgabe der vorliegenden Erfindung, eine Vorrichtung zur Durchführung eines Verfahrens bereitzustellen zur Bestimmung der Partikelgrößenverteilung eines Aerosols, mit der den Nachteilen des aufgezeigten Standes der Technik entgegengetreten wird, welche insbesondere den Einfluss der Verdunstung der Aerosol-Partikel minimiert und die Reproduzierbarkeit der Messergebnisse steigert.

Die Aufgabe wird gelöst durch eine Vorrichtung mit:
- einer Konditioniereinrichtung zur Sättigung eines Trägermediums mit einem Konditionierungsmittel entsprechend einem vorgegebenen Sättigungsgrad,
- einer Dosiereinrichtung für die Dosierung und Bereitstellung einer Arzneistoff-Fonnutierung,
- einer Mischkammer zum Mischen des bereitgestellten, konditionierten Trägermediums und der bereitgestellten Arzneistoff-Formulierung zu einem konditionierten Aerosol, und
- mindestens einer Messzelle, in die das konditionierte Aerosol zur Durchführung einer Messung zur Aerosol-Partikelgrößenverteilung mittels des Laserbeugungsverfahrens und der Streulichtmethode zugeführt wird, wobei die Messzelle eine Winkelmesszelle ist, welche den USP-Throat und mindestens eine in den USP-Throat integrierte Messzelle umfasst.

Vorteilhaft sind Ausführungsformen der Vorrichtung, bei denen die mindestens eine Messzelle zur Durchführung des Laserbeugungsverfahrens und der Streulichtmethode mindestens ein Eintrittsfenster zum Eintreten eines Lichtstrahles einer Lichtquelle und mindestens ein Austrittsfenster zum Austreten des Streulichtes des Lichtstrahles aufweist, wobei vorzugsweise das mindestens eine Eintrittsfenster gekippt zu den einfallenden Lichtstrahlen der Lichtquelle angeordnet ist und vorzugsweise das mindestens eine Austrittsfenster gekippt zu den einfallenden Lichtstrahlen angeordnet ist. Dadurch, dass der Lichtstrahl nicht senkrecht auf das Eintritts- bzw. Austrittsfenster trifft, werden Reflektionen vermieden.

Vorteilhaft sind Ausführungsformen der Vorrichtung, bei denen das mindestens eine Eintrittsfenster und das mindestens eine Austrittsfenster um gleich große Winkel - aber entgegengesetzt - gegenüber den einfallenden Lichtstrahlen gekippt angeordnet sind. Durch die entgegengesetzte Verkippung der beiden Fenster und gleich große Winkel wird der Strahlversatz der ein- bzw. ausfallenden Lichtstrahlen infolge der Verkippung wieder aufgehoben.

Günstig sind Ausführungsformen der Vorrichtung, bei denen das mindestens eine Eintrittsfenster und/oder das mindestens eine Austrittsfenster demontierbar ausgeführt sind. Hierdurch ist es möglich, die Messzelle, aber auch die Fenster selbst nach durchgeführter Messung zu reinigen bzw. eine Ablagerung von Aerosol-Partikeln in der Messzelle und auf den Fenstern zu untersuchen.

Vorteilhaft sind Ausführungsformen der Vorrichtung, bei denen das mindestens eine Eintrittsfenster und das mindestens eine Austrittsfenster dünn ausgeführt sind, insbesondere eine Dicke von weniger als 2 mm aufweisen. Vorteilhaft an dieser Ausführungsform ist, dass der vorzugsweise schräg auf die gekippten Fenster ein- bzw. ausfallende Lichtstrahl, der beim Eintritt von der Umgebungsatmosphäre in das Glas gebeugt wird, bei nur dünn ausgeführten Fenstern einen lediglich kleinen Strahlversatz erfahrt.

Vorteilhaft sind Ausführungsformen der Vorrichtung, bei denen die mindestens eine Messzelle zur Durchführung der Streulichtmethode mindestens ein Eintrittsfenster zum Eintreten eines Lichtstrahles einer Lichtquelle und mindestens ein Austrittsfenster zum Austreten des Streulichtes des Lichtstrahles aufweist, wobei die beiden Fenster vorzugsweise im wesentlichen rechtwinklig zueinander angeordnet sind.

Gemäß dem Verfahren wird das Trägermedium, in welches das Aerosol eingebracht wird, mit einem Konditionierungsmittel gemäß einem vorgegebenen Sättigungsgrad angereichert. Durch diese Maßnahme wird einer Verdunstung der Partikel einer Lösungs-Formulierung bzw. Suspensions-Formulierung entgegengetreten und damit sämtlichen mit der Verdunstung verbundenen Nachteilen, insbesondere bei Substanzen, die auf die Änderung des pH-Werts empfindlich reagieren.

Zu dem wird die Anreicherung des Trägermediums mit einem Konditionierungsmittel den tatsächlich vorliegenden Bedingungen - insbesondere der hohen Luftfeuchte - im Mund-Hals-Rachenraum des Menschen gerecht, wodurch möglichst realitätsnahe Messbedingungen geschaffen werden sollen. Ergänzend können Temperatur und Druck gezielt eingestellt werden.

Damit kommen dem Konditionierungsmittel zwei Aufgaben zu, wobei die Realisierung einer den tatsächlichen Bedingungen entsprechenden relativen Feuchte grundsätzlich bei allen Arzneistoff Formulierungen dazu führt, dass eine möglichst wirklichkeitsgetreue Aerosol-PartikelgröBenverteilung ermittelt wird und somit die Aussagekraft der Messung zur Beurteilung der Depositionscharakteristik im Lungen- und Bronchialbereich gesteigert wird.

Im Fall von Lösungs- oder Suspensionsformulierungen beträgt der Sättigungsgrad des Trägermediums bevorzugt mehr als 80%, besonders bevorzugt mehr als 90%, am stärksten bevorzugt mehr als 95%. Ideal sind 100%.

Das in der Art konditionierte Trägermedium wird entsprechend dem erfindungsgemäßen Verfahren mit der zu vermessenden Arzneistoff Formulierung zu einem konditionierten Aerosol vermischt. Hierzu können beispielsweise bei Arzneistoff-Lösungen Zerstäuber bzw. Vemebler eingesetzt werden, wie sie in der Beschreibungseinleitung beschrieben wurden.

Vorteilhafterweise wird auch hier eine möglichst genaue Nachbildung der Realität im Versuch angestrebt, weshalb vorzugsweise der Zerstäuber in einer Mischkammer angeordnet wird, in der das durch den Zerstäuber erzeugte Aerosol mit dem Trägermaterial Luft oder einem anderen Gas gemischt wird, um von da aus das Gemisch in einer definierten Strömung durch die Messvorrichtung zu fuhren. Der Vorteil des so geführten Aerosols besteht u.a. darin, dass hierdurch den Bedingungen, wie sie beim Einatmen eines Aerosols durch einen Patienten herrschen, sehr nahe gekommen wird.

Andererseits verhindert der Trägerstrom ein Beschlagen der Fenster der Messzelle(n) bei Flüssigkeitsaerosolen, was insbesondere bei der Laserbeugungsmethode von Vorteil ist. Um diesen Effekt zu erzeugen, ist es nicht notwendig, dass das Trägermaterial konditioniert, d.h. mit Wasser gesättigt ist.

Beispielsweise kann das Trägermaterial durch Schlitze im Mundstück des Inhalators in den Mundstück-Innenraum strömen und sich dort mit der dort eingebrachten, vom Inhalator erzeugten Aerosolwolke vermischen.

Das so generierte, konditionierte Aerosol wird anschließend mindestens einer Messzelle zugeführt und zur Bestimmung der Aerosol-Partikelgrößenverteilung vermessen.

Vorteilhaft sind Verfahren, bei denen die Vermessung des konditionierten Aerosols mittels des Laserbeugungverfahrens erfolgt. Das Laserbeugungsverfahren ist ein schnelles Verfahren, welches einen schnellen Zugriff auch auf die Messwerte gestattet.

Vorteilhaft sind Verfahren, bei denen die Vermessung des konditionierten Aerosols mittels der Streulichtmethode erfolgt. Die Streulichtmethode liefert neben einer qualitativen Aussage - der Partikelgröße - auch eine quantitative Aussage, da die Partikel nicht nur hinsichtlich der Größe vermessen werden, sondern auch gezählt werden.

Vorteilhaft sind Verfahren, bei denen die Vermessung des konditionierten Aerosols mittels der Impaktormethode erfolgt. Da die Impaktormethode das Verfahren ist, welches am weitesten verbreitet ist - u.a. auch, weil es in den Arzneibüchern empfohlen und genau beschrieben ist - und mit dem die meisten Messungen durchgeführt wurden, bietet dieses Verfahren einen großen Fundus an Vergleichmessungen. Werden also neue Arzneistoff-Formulierungen und/oder neue Dosiervorrichtungen, insbesondere Zerstäuber, untersucht kann es sinnvoll sein, diese mit herkömmlichen Arzneistoff-Fonnulierungen oder Dosiervorrichtungen zu vergleichen.

Vorteilhaft sind Verfahren, bei denen die Vermessung des konditionierten Aerosols mittels des Laserbeugungverfahrens und der Streulichtmethode erfolgt. Die Kombination der beiden Verfahren kombiniert die Vorteile beider Verfahren, nämlich der Messgenauigkeit des Laserbeugungsverfahrens in qualitativer Hinsicht mit der Streulichtmethode als Partikelzählverfahren und damit der Möglichkeit, auch quantitative Aussagen machen zu können.

Günstig sind Verfahren, die dadurch gekennzeichnet sind, dass die Vermessung des konditionierten Aerosols zusätzlich mit der Impaktormethode erfolgt. Bei dieser Verfahrensvariante dient die zusätzlich angewendete Impaktormethode in erster Linie dazu, die mit dem erfindungsgemäßen Verfahren erzielten Messergebnisse zu verifizieren. Versuche haben ergeben, dass die Messergebnisse der beiden Verfahren eine gute Übereinstimmung aufweisen.

Gemäß dem erfindungsgemäßen Verfahren kann optional die Messung der Aerosol-Partikelgrößenverteilung entweder mittels des Laserbeugungsverfahrens oder mittels der Streulichtmethode oder mittels beider Verfahren, d.h. des Laserbeugungsverfahrens und der Streulichtmethode durchgeführt werden, wobei bei Anwendung beider Verfahren, diese zusammen in einer Messzelle durchgeführt werden bzw. für jedes Verfahren eine eigene Messzelle vorgesehen wird, so dass beide Verfahren über eine eigene, ihren speziellen Anforderungen entsprechende Messzelle verfügen.

Experimentelle Untersuchungen haben ergeben, dass das erfindungsgemäße Verfahren, insbesondere das Laserbeugungsverfahren in einer konditionierten Aerosol-Strömung eine sehr gute Übereinstimmung mit den mittels des Andersen-Kaskadenimpaktors erzielten Messergebnissen aufweist.

Vorteilhaft sind Ausführungsformen des Verfahrens, bei denen bei Vorliegen einer Lösungs-Formulierung, d.h. einer Arzneistoff-Lösung, als Konditionierungsmittel das Lösungsmittel, in dem der Arzneistoff gelöst ist, verwendet wird. Um gezielt die Verdunstung des in den Aerosol-Partikeln enthaltenen Lösungsmittels zu verhindern, wird vorteilhafterweise das Lösungsmittel, dessen Verdunstung gehemmt werden soll, als Konditionierungsmittel in das Trägermedium eingebracht. Durch Einbringen des Lösungsmittels als Konditonierungsmittel wird der Dampfdruck des Lösungsmittels im Trägermedium gesenkt, wodurch eine Verdunstung der flüssigen Aerosol-Partikel erschwert bzw. mengenmäßig reduziert wird.

Günstig sind Verfahrensvarianten, bei denen bei Vorliegen einer Suspensions-Formulierung, das hießt, einer Arzneistoff-Suspension als Konditionierungsmittel das Suspensionsmittel, in dem der Arzneistoff in Form von Schwebepartikeln enthalten ist, verwendet wird. Die Gründe hierfür sind den bei der Lösungs-Formulierung genannten ähnlich. Zur Verhinderung bzw. Minderung der Verdunstung des in den Aerosol-Partikeln enthaltenen Suspensionsmittels ist vorzugsweise das Suspensionsmittel als Konditionierungsmittel in das Trägermedium einzubringen, wodurch wiederum der Dampfdruck des Suspensionsmittels im Trägermedium gesenkt wird und damit der Neigung zur Verdunstung entgegengetreten wird.

Günstig sind Verfahrensvarianten, bei denen bei Vorliegen einer treibgas-freien Lösungs- oder Suspensions-Formulierung als Konditionierungsmittel das Lösungs- bzw. Suspensionsmittel verwendet wird. Dabei sind Wasser, Wasser-Alkohol-Gemische oder Alkohol bevorzugt. Bevorzugter Alkohol ist Ehtanol. Wasser ist am stärksten bevorzugt.

Aufgrund der Tatsache, dass die Pulver-Formulierung im Gegensatz zu der Lösungs- und Suspensions-Formulierung über kein Lösungs- oder Suspensionsmittel verfügt, wird vorzugsweise Wasser als Konditionierungsmittel in das Trägermedium eingebracht.

Dies kommt auch den tatsächlichen Verhältnissen sehr nahe, da sich die vom Menschen eingeatmete feuchte Luft, die als Trägermedium für das Pulver dient, in zufrieden stellender Weise durch mit Wasser als Konditionierungsmittel gesättigter Luft simulieren bzw. im Versuch nachbilden lässt.

Im Gegensatz zu den beiden anderen Arzneistoff-Formulierungen ist bei einer Pulverformulierung ein Verfahren zu bevorzugen, bei dem das Trägermedium einen Sättigungsgrad von 75% nicht übersteigt, da der als feines Pulver vorliegende Arzneistoff bei höheren Sättigungsgraden dazu neigt, größere Teilchen zu bilden, insbesondere zu agglomerieren.

Vorteilhaft sind ebenfalls Verfahrensvarianten, bei denen als Trägermedium Luft verwendet wird. Ein Grund hierfür ist wiederum, dass die Verwendung von Luft als Trägermedium den tatsächlichen Verhältnissen entspricht und somit einer guten Simulation im Versuch dient.

Vorteilhaft sind Verfahren, bei denen im Rahmen der Messung ein USP-Throat verwendet wird, durch den die Aerosol-Strömung geführt wird. Hierdurch wird die Mund-Rachen-Halsraum-Strömung simuliert.

Vorteilhaft sind Verfahren, bei denen die Messung zur Aerosol-Partikelgrößenverteilung mittels des Laserbeugungverfahrens und/oder der Streulichtmethode in mindestens einer gegenüber der Umgebung abgegrenzten Messzelle durchgeführt wird. Um die Konditionierung aufrechtzuerhalten und das konditionierte Aerosol zu stabilisieren, d.h. gegenüber der umgebenden Atmosphäre abzugrenzen empfiehlt sich eine entsprechend präparierte Messzelle.

Zu bevorzugen sind Ausführungsformen des Verfahrens, bei denen die Messung zur Aerosol-Partikelgrößenverteilung mittels des Laserbeugungsverfahrens und/oder der Streulichtmethode in mindestens einer im USP-Throat integrierten Messzelle durchgeführt wird. Das USP-Throat ist ein von der FDA (Food and Drug Agency) anerkanntes Versuchsmittel.

Dabei kann die mindestens eine Messzelle sowohl im ersten Teilstück des USP-Throats als auch im zweiten Teilstück des USP-Throats angeordnet werden. Darüber hinaus besteht die Möglichkeit, wenn zwei Messzellen vorgesehen werden, eine Messzelle im ersten Teilstück und die zweite Messzelle im zweiten Teilstück des USP-Throats anzuordnen, wobei auch hier wiederum die Möglichkeit besteht, beide Messzellen im ersten oder im zweiten Teilstück des USP-Throats anzuordnen.

Diese mindestens eine Messzelle wird dann in dem in den Figuren 2a bis 2d dargestellten und in der Eingangsbeschreibung ausführlich erläuterten USP-Throat integriert.

Damit ist es möglich, dass Laserbeugungsverfahren und/oder die Streulichtmethode an einer definierten, wohlbekannten Aerosol-Strömung durchzuführen. Damit wird die als nachteilig empfundene Bestimmung der Partikelgrößenverteilung an einer freien, inhomogenen und nicht reproduzierbaren Aerosolwolke durch ein definiertes Verfahren unter Zuhilfenahme standardisierter Bauteile ersetzt.

Überraschender Weise hat sich in Versuchen gezeigt, dass durch eine geeignete Modifikation des USP-Throats zur Integration mindestens einer Messzelle die Vorteile des Laserbeugungsverfahrens und/oder der Streulichtmethode mit den Vorteilen der Impaktormethode aufgrund des USP-Throats verknüpft werden können, wobei zum Erstaunen der Fachleute die Modifikation, das heißt, die konstruktive Änderung des USP-Throats keinen Einfluss auf die Meßergebnisse der Partikelgrößenverteilung hat.

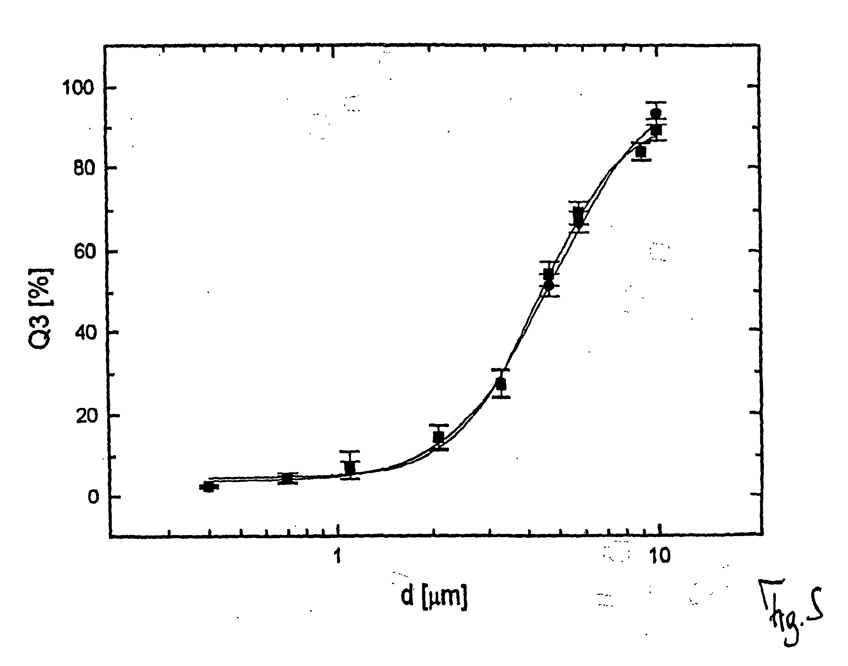

Dies wurde in mehreren Versuchen verifiziert, wobei ein konventioneller Kaskadenimpaktor mit dem modifizierten USP-Throat versehen wurde und Vergleichsmessungen angestellt wurden, die den Messungen mit dem herkömmlichen USP-Throat gegenübergestellt wurden. Das Ergebnis der Vergleichsmessung zeigt Figur 5, in welcher die Verteilungssumme Q₃ in Abhängigkeit vom Partikeldurchmesser dargestellt ist. Die mit einem kleinen Viereck gekennzeichneten Messwerte repräsentieren die Ergebnisse eines mit einem Original-Throat ausgerüsteten Kaskadenimpaktors, wohingegen die mit einem kleinen Kreis gekennzeichneten Messergebnisse die Messergebnisse repräsentieren, die mit einem Kaskadenimpaktor ermittelt wurden, der mit dem erfindungsgemäßen, modifizierten USP-Throat ausgestattet ist. Es ergibt sich eine überaus gute Übereinstimmung, so dass die Schlussfolgerung zulässig ist, dass die Modifikation des USP-Throats die mit dem Original-Throat gewonnen Daten nicht wesentlich ändert.

Damit ist das erfindungsgemäße Verfahren, das die Anordnung mindestens einer Messzelle in dem USP-Throat vorsieht, geeignet, das konventionelle Verfahren mittels Kaskadenimpaktors, welches aufgrund der aufwendigen Analytik keine schnellen Messungen zulässt, zu ersetzen.

Vorteilhaft an dieser Verfahrensvariante ist, dass es sich bei dem USP-Throat um ein exakt genormtes Bauteil handelt, welches den Mund-Hals-Rachenraum des Menschen nachbildet, und eine genau definierte Aerosol-Strömung gewährleistet.

Günstig sind Ausführungsformen des Verfahrens, bei denen das vermessene Aerosol zur Abscheidung der Partikel einem Abscheider zugeführt wird. Dies dient der Bestimmung der absoluten Gesamtpartikelmasse der mit dem Aerosol zugeführten Partikel bzw. Arzneistoff-Formulierung. Dabei kann als Abscheider u.a. auch ein Filter verwendet werden.

Günstig ist dies vor allem im Zusammenhang mit der Verfahrensvariante des erfindungsgemäßen Verfahrens, bei dem das Laserbeugungsverfahren nicht in Kombination mit der Streulichtmethode, sondern für sich allein angewendet wird. In diesem Fall besteht nämlich Bedarf an einer Vorrichtung, die auch quantitative Aussagen hinsichtlich der zugeführten Partikelmasse zulässt.

Während die Streulichtmethode nämlich sowohl qualitative als auch quantitative Ergebnisse liefert, d.h. sowohl Informationen hinsichtlich der Größenverteilung als auch hinsichtlich der Partikelmassen zulässt, kann mit dem Laserbeugungsverfahren lediglich eine Aussage hinsichtlich der Größenverteilung getroffen werden und nicht hinsichtlich der Quantität der Aerosol-Partikel.

Günstig sind Verfahren, bei denen als Lichtquelle für das Laserbeugungsverfahren bzw. die Streulichtmethode ein Laser verwendet wird. Vorteilhaft an der Verwendung eines Lasers ist, dass dieser ein paralleles Licht aussendet.

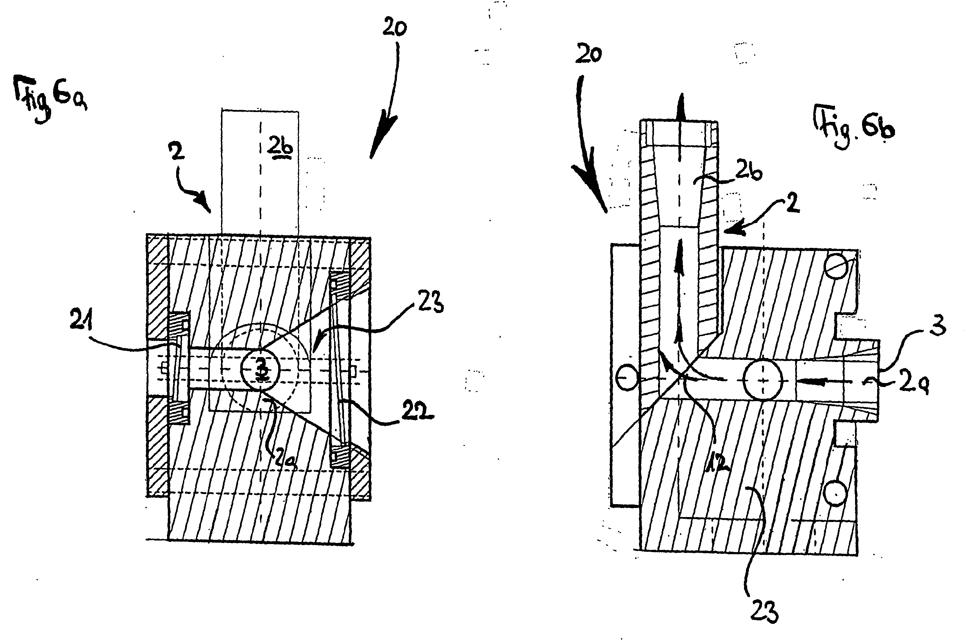

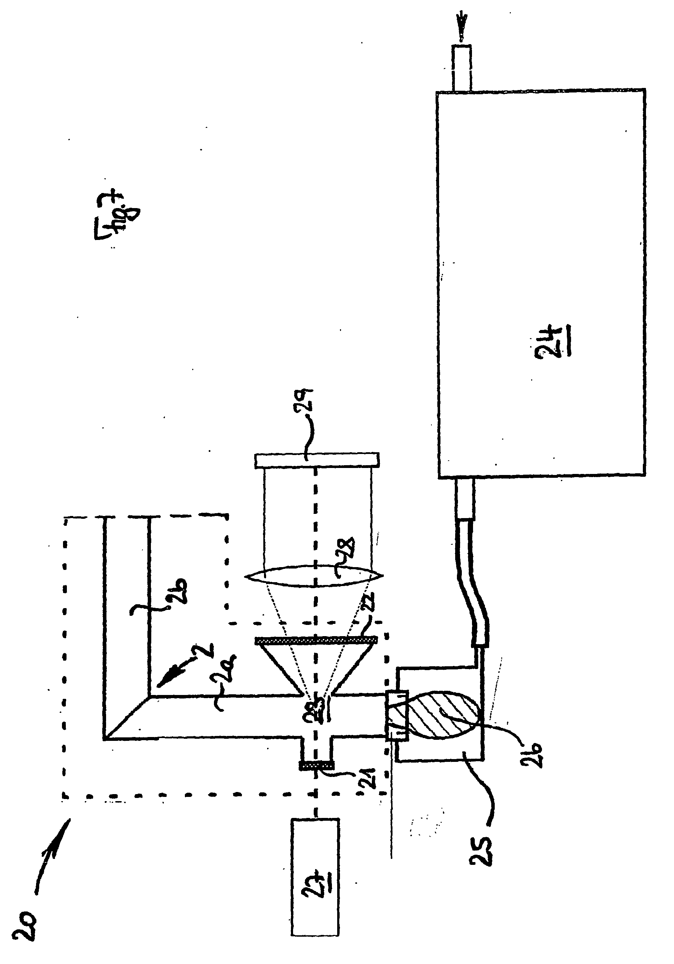

Im folgenden wird die vorliegende Erfindung anhand eines Ausführungsbeispieles gemäß den Figuren 6a, 6b und 7 erläutert. Im einzelnen zeigt:
- Figur 1: einen Andersenkaskadenimpaktor mit dem USP-Throat in der Seitenansicht, teilweise geschnitten,
- Figur 2a bis 2d: den USP-Throat mit seinen genormten, geometrischen Maßen,
- Figur 3: eine Impaktordüse schematisch und geschnitten in der Seitenansicht,
- Figur 4: ein Diagramm, bezüglich der Abhängigkeit der Tröpfchengröße von der Tröpfchen-Lebensdauer für drei unterschiedliche Sättigungsgrade mit Wasser.
- Figur 5: ein Diagramm zur Gegenüberstellung der Eigenschaften eines herkömmlichen USP-Throat gegenüber jenen der Winkelmesszelle.
- Figur 6a bis 6b: ein Ausführungsbeispiel einer Winkelmesszelle in den Seitenansichten, teilweise geschnitten und
- Figur 7: ein Ausführungsbeispiel der Vorrichtung zur Messung der Aerosol-Partikelgrößenverteilung.

Figur 6a zeigt ein erstes Ausführungsbeispiel einer Winkelmesszelle 20, welche einen USP-Throat 2 und eine Messzelle 23 zur Durchführung des Laserbeugungsverfahrens umfasst. Dabei ist die Messzelle im ersten Teilstück 2a des USP-Throats angeordnet, so dass die Aerosol-Strömung noch vor Abscheidung der ersten Partikelftaktion im Kniestück beim Übergang des ersten Teilstückes 2a in das zweite Teilstück 2b vermessen wird.

Die im Schnitt dargestellte Messzelle 23 verfügt über ein Eintrittsfenster 21 und ein Austrittsfenster 22. Beide Fenster 21, 22 sind demontierbar ausgeführt, so dass nach erfolgter Messung die Messzelle 23 gereinigt und untersucht werden kann. Sowohl das Eintrittsfenster 21 als auch das Austrittsfenster 22 sind gegenüber dem einfallenden Lichtstrahl leicht gekippt, wodurch eine Reflektion des einfallenden Lichtstrahles vermieden wird. Dabei sind die beiden Fenster 21, 22 entgegengesetzt zueinander im gleichen Winkel gekippt, um den Strahlversatz des einfallenden Laserlichts infolge der Verkippung zu kompensieren.

Gut zu erkennen ist, dass das Eintrittsfenster 21 gegenüber dem Austrittsfenster 22 relativ klein ausgeführt ist. Grund hierfür ist, dass es sich bei dem durch das Eintrittsfenster 21 einfallende Licht um einen sich ungestört geradlinig ausbreitenden Lichtstrahl handelt, wohingegen es sich bei dem durch das Austrittsfenster 22 austretenden Licht um das Streulicht des an den Aerosol-Partikeln gebeugten einfallenden Lichtstrahles handelt, weshalb das Austrittsfenster 22 auch in derart auszubilden ist, dass Streulicht eines genügend großen Winkelbereiches erfasst wird, das heißt, die Messzelle 23 verlassen kann, um so von einem Detektor wahrgenommen zu werden.

Figur 6b zeigt die in Figur 6a dargestellte Winkelmesszelle 20 in einer gegenüber der in Figur 6a dargestellten Position um 90° gedrehten Ansicht, teilweise geschnitten.

Gut zu erkennen ist der aus dem ersten Teilstück 2a und dem zweiten Teilstück 2b bestehende USP-Throat 2 und die an ihm im ersten Teilstück 2a integrierte Messzelle 23. Hierdurch wird die durch die Eintrittsöffnung 3 eintretende Aerosol-Strömung vermessen, bevor sie durch das Kniestück in das zweite Teilstück 2b umgeleitet wird. Dargestellt ist auch die Flugbahn eines auf der Innenwand des zweiten Teilstückes 2b einschlagenden Partikels, der mit den anderen an dieser Stelle einschlagenden Partikel die erste abgeschiedene Fraktion der Aerosol-Strömung bildet.

Figur 7 zeigt ein Ausführungsbeispiel einer Vorrichtung zur Messung der Aerosol-Partikelgrößenverteilung in einer schematischen Darstellung.

Die Vorrichtung umfasst eine Konditioniereinrichtung 24 zur Sättigung eines Trägermediums mit einem Konditioniermittel entsprechend einem vorgegebenen Sättigungsgrad. Das so konditionierte Trägermedium wird einer Mischkammer 25 zugeführt, in der ein zu untersuchender Vernebler, welcher eine in ihm bevorratete Arzneistoff-Lösung zerstäubt, angeordnet ist. Der Vernebler 26 dient als Dosiereinrichtung 26 für die Dosierung und Bereitstellung einer Arzneistoff-Lösung. Die mittels der Dosiereinrichtung 26 bereitgestellte Arzneistoff-Lösung wird in der Mischkammer 25 mit dem konditionierten Trägermedium zu einem konditionierten Aerosol vermischt.

Das in derart konditionierte Aerosol wird einer Messzelle 23 zugeführt.

Diese Messzelle 23 ist in einem ersten Teilstück 2a des USP-Throats 2 angeordnet und bildet mit dem Throat 2 zusammen eine Winkelmesszelle 20, die in Figur 7 durch eine gestrichelte Linie umschlossen wird.

Das vom Laser 27 ausgesendete Licht fällt durch das Eintrittsfenster 21 ins Innere der Messzelle 23 und trifft dort auf die vom ersten Teilstück 2a des USP-Throats 2 geführte Aerosol-Strömung. Das einfallende Laserlicht wird an den Partikeln des Aerosol, welches für das Licht ein Hindernis darstellen gebeugt. Das Streulicht, welches durch die Beugung des einfallenden Laserlichts an den Partikeln des Aerosols generiert wird, verlässt die Messzelle 23 durch das Austrittsfenster 22, wird dann durch eine Linse 28 gebündelt und einem Halbleiter-Detektor 29 zur Auswertung zugeführt. Die Aerosolströmung wird im Anschluss an die Vermessung in der Messzelle 23 in das zweite Teilstück 2b des USP-Throats 2 umgeleitet. Nach Durchlaufen des Throats 2 bzw. der Winkelmesszelle 20 kann die mittels des Laserbeugungsverfahrens vermessene Aerosol-Strömung einem Partikelabscheider zugeführt werden, um auf diese Weise auch quantitative Aussagen hinsichtlich der Partikelmasse zu ermöglichen, wobei der Partikelabscheider in Form eines Filters ausgeführt werden kann.

Eine zusätzliche Messzelle zur Durchführung einer Messung gemäß der Streulichtmethode ist vorgesehen, wobei diese Messzelle sowohl im ersten Teilstück 2a als auch im zweiten Teilstück 2b des USP-Throats 2 angeordnet werden kann. Damit wäre ebenfalls die Möglichkeit gegeben, eine quantitative Aussage hinsichtlich der Partikelmasse zu treffen.

An die in Figur 7 dargestellte Vorrichtung könnte sich ebenfalls ein Andersen-Kaskadenimpaktor anschließen, der unter anderem zur Verifizierung der mittels Laserbeugungsverfahren ermittelten Aerosol-Partikelgrößenverteilung dienen könnte.

Aufbauend auf dem Vorbeschriebenen stellt sich die vorliegende Erfindung wie folgt dar:

Die Bestimmung der Teilchengrößenverteilung eines Aerosols spielt in der pharmazeutischen Entwicklung eine entscheidende Rolle. Hierfür Voraussetzung ist eine valide Methode beispielsweise die in den Arzneibüchern beschriebene Kaskadenimpaktor-Methode. Sie verlangt eine Bestimmung der Wirkstoffkonzentration, um Teilchengrößenverteilung zu bestimmen.

Jedoch kommt es bei der oben genannten Methode und auch anderen Methoden schnell zu einer pH-Erniedrigung oder pH-Wert Erhöhung, was bei empfindlichen Wirkstoffen zu deren Zersetzung führen kann. Als Folge dessen können die Teilchengrößen nicht mehr exakt bestimmt werden, da in der Regel für die Bestimmung der Teilchengröße die Wirkstoffkonzentration bestimmt wird.

Es hat sich nun überraschend gezeigt, dass durch Einstellung einer relativen Feuchte von bevorzugt 80 bis 100%, besonders bevorzugt 90 bis 100% mit dem bei einer Lösungs- oder Suspensionsformulierung zugrunde liegenden Lösungsmittel, bevorzugt Wasser oder ein Wasser-Alkohol-Gemisch (Ethanol), die Wirkstoffzersetzung während des Messvorgangs vollständig unterdrückt werden kann.

Ein weiterer Vorteil des erfindungsgemäßen Verfahrens besteht darin, dass die Teilchengröße unabhängig von der Art der wässrigen Formulierung bestimmt werden kann, d.h. unterschiedliche Salzkonzentrationen in der Lösung oder Suspension haben keinen Einfluss auf die Bestimmung der Teilchengröße.

Es hat sich auch vorteilhafter Weise gezeigt, dass die Messung der Partikel nicht gestört wird, wenn in der Messapparatur, besonders dem Kaskadenimpaktor, während der Messung Wasser auskondensiert.

Im Vergleich zur Standardmessung ohne Konditionierung der Luft mit einem Lösungsmittel wie Wasser kann durch das erfindungsgemäße Verfahren die relative Standardabweichung von 10 - 15% auf ca. 2% verbessert werden.

Bei 100% relativer Luftfeuchtigkeit weist die Methode beim MMAD (mass median aerodynamic diameter) eine deutlich geringere Streuung auf als die Standardmethode ohne Konditionierung der Luft mit einem Lösungsmittel wie Wasser.

Für das Verfahren kann die mit Feuchtigkeit gesättigte Luft dadurch hergestellt werden, dass Kompressionsluft durch ein auf über Raumtemperatur erwärmtes Wasserbad geleitet wird. Bevorzugt beträgt die Wassertemperatur ca. 30 bis 45°C.

Das Verfahren wird bevorzugt für die Messung des Sprühbildes eines treibgasfreien "soft mist inhalers", bevorzugt der Marke Respimat®, offenbart beispielsweise in der WO 97/12687, verwendet. Bevorzugte Formulierungen sind in der WO 97/01329 und WO 98/27959 beschrieben, auf die hiermit ausdrücklich Bezug genommen wird.

## Patentansprüche

1. Vorrichtung zur Durchführung eines Verfahrens zur Bestimmung der Größenverteilung der in einem Aerosol enthaltenen Partikel, insbesondere der Partikel einer pharmazeutischen Arzneistoff-Formulierung, insbesondere einer Lösungs-Formulierung, Suspensions-Formulierung oder Pulver-Formulierung, bei dem ein Trägermedium bereitgestellt wird, welches entsprechend einem vorgegebenen Sättigungsgrad mit einem Konditionierungsmittel gesättigt ist, bei dem das konditionierte Trägermedium mit der Arzneistoff Formulierung zu einem konditioniertem Aerosol gemischt wird und bei dem das Aerosol zu mindestens einer Messzelle zugeführt wird und das konditionierte Aerosol zur Bestimmung der Aerosol-Partikelgrößenverteilung mittels des Laserbeugungsverfahrens und der Streulichtmethode vermessen wird, mit
- einer Konditioniereinrichtung (24) zur Sättigung eines Trägermediums mit einem Konditionierungsmittel entsprechend einem vorgegebenen Sättigungsgrad,
- einer Dosiereinrichtung (26) für die Dosierung und Bereitstellung einer Arzneistoff-Formulierung,
- einer Mischkammer (25) zum Mischen des bereitgestellten, konditionierten Trägermediums und der bereitgestellten Arzneistoff-Formulierung zu einem konditionierten Aerosol,
- mindestens einer Messzelle (23), in die das konditionierte Aerosol zur Durchführung einer Messung zur Aerosol-Partikelgrößenverteilung mittels des Laserbeugungsverfahrens und der Streulichtmethode zugeführt wird, wobei die Messzelle eine Winkelmesszelle ist, welche einen USP- Throat (2) und mindestens eine in den USP-Throat integrierte Messzelle (23) umfasst.

2. Vorrichtung nach Anspruch 1,
**dadurch gekennzeichnet,**
**dass** die mindestens eine Messzelle zur Durchführung des Laserbeugungsverfahrens und der Streulichtmethode mindestens ein Eintrittsfenster (21) zum Eintreten eines Lichtstrahles einer Lichtquelle und mindestens ein Austrittsfenster (22) zum Austreten des Streulichtes des Lichtstrahles aufweist.

3. Vorrichtung nach Anspruch 2,
**dadurch gekennzeichnet,**
**dass** das mindestens eine Eintrittsfenster (21) gekippt zu den einfallenden Lichtstrahlen der Lichtquelle angeordnet ist.

4. Vorrichtung nach Anspruch 2 oder 3,
**dadurch gekennzeichnet,**
**dass** das mindestens eine Austrittsfenster (22) gekippt zu den austretenden Lichtstrahlen angeordnet ist.

5. Vorrichtung nach einem der Ansprüche 2 bis 4,
**dadurch gekennzeichnet,**
**dass** das mindestens eine Eintrittsfenster (21) und das mindestens eine Austrittsfenster (22) um gleichgroße Winkel - aber entgegengesetzt - gegenüber den einfallenden Lichtstrahlen gekippt angeordnet sind.

6. Vorrichtung nach einem der Ansprüche 2 bis 5,
**dadurch gekennzeichnet,**
**dass** das mindestens eine Eintrittsfenster (21) und/oder das mindestens eine Austrittsfenster (22) demontierbar ausgeführt sind.

7. Vorrichtung nach einem der Ansprüche 2 bis 6,
**dadurch gekennzeichnet,**
**dass** das mindestens eine Eintrittsfenster (21) und das mindestens eine Austrittsfenster (22) dünn ausgeführt sind, insbesondere eine Dicke von weniger als 2mm aufweisen.

8. Vorrichtung nach einem der Ansprüche 2 bis 7,
**dadurch gekennzeichnet,**
**dass** das mindestens eine Eintrittsfenster (21) und das mindestens eine Austrittsfenster (22) gegenüberliegend angeordnet sind

## Claims

1. Apparatus for carrying out a method of determining the size distribution of the particles contained in an aerosol, in particular the particles of a pharmaceutical drug formulation, in particular a solution formulation, a suspension formulation or a powder formulation, in which there is prepared a carrier medium which is saturated with a conditioning agent in accordance with a predetermined degree of saturation, in which the conditioned carrier medium is mixed with the drug formulation to afford a conditioned aerosol and in which the aerosol is passed to at least one measuring cell and the conditioned aerosol is measured to determine the aerosol particle size distribution by means of the laser diffraction method and the scatter light method, comprising
- a conditioning device (24) for saturating a carrier medium with a conditioning agent in accordance with a predetermined degree of saturation,
- a metering device (26) for metering and preparing a drug formulation,
- a mixing chamber (25) for mixing the prepared conditioned carrier medium and the prepared drug formulation to afford a conditioned aerosol, and
- at least one measuring cell (23) into which the conditioned aerosol is passed to carry out a measurement operation for the aerosol particle size distribution by means of the laser diffraction method and the scatter light method, wherein the measuring cell is an angle measuring cell which includes a USP throat (2) and at least one measuring cell (23) integrated into the USP throat.

2. Apparatus according to claim 1 **characterised in that** the at least one measuring cell for carrying out the light diffraction method and the scatter light method has at least one entry window (21) for the entry of a light beam of a light source and at least one exit window (22) for the exit of the scatter light of the light beam.

3. Apparatus according to claim 2 **characterised in that** the at least one entry window (21) is arranged tilted relative to the incident light beams of the light source.

4. Apparatus according to claim 2 or claim 3 **characterised in that** the at least one exit window (22) is arranged tilted relative to the issuing light beams.

5. Apparatus according to one of claims 2 to 4 **characterised in that** the at least one entry window (21) and the at least one exit window (22) are arranged tilted with respect to the incident light beams through equal angles but in opposite relationship.

6. Apparatus according to one of claims 2 to 5 **characterised in that** the at least one entry window (24) and/or the at least one exit window (22) are adapted to be removable.

7. Apparatus according to one of claims 2 to 6 **characterised in that** the at least one entry window (21) and the at least one exit window (22) are thin and in particular are of a thickness of less than 2 mm.

8. Apparatus according to one of claims 2 to 7 **characterised in that** the at least one entry window (21) and the at least one exit window (22) are arranged in opposite relationship.

## Revendications

1. Dispositif destiné à réaliser un procédé de détermination de la répartition granulométrique des particules contenues dans un aérosol, notamment des particules d'une formulation médicamenteuse pharmaceutique, notamment d'une formulation pour solution, d'une formulation pour suspension ou d'une formulation pour poudre, dans lequel un milieu de support est mis à disposition, lequel est saturé, selon un degré de saturation correspondant, avec un agent de conditionnement, dans lequel le milieu de support conditionné est mélangé à la formulation médicamenteuse pour obtenir un aérosol conditionné et dans lequel l'aérosol est amené au moins à une cellule de mesure et l'aérosol conditionné, pour déterminer la répartition granulométrique des particules, est mesuré au moyen du procédé de diffraction au laser et de la technique utilisant la diffusion de la lumière, comprenant
- un système de conditionnement (24) destiné à saturer un milieu de support avec un agent de conditionnement selon un degré de saturation prédéfini,
- un système de dosage (26) pour le dosage et la mise à disposition d'une formulation médicamenteuse,
- une chambre de mélange (25) destinée à mélanger le milieu de support conditionné mis à disposition et la formulation médicamenteuse mise à disposition pour obtenir u aérosol conditionné,
- au moins une cellule de mesure (23), dans laquelle est amené l'aérosol conditionné, destinée à réaliser une mesure de la répartition granulométrique de l'aérosol au moyen du procédé de diffraction au laser et de la technique utilisant la diffusion de la lumière, la cellule de mesure étant une cellule de mesure angulaire, laquelle comporte une gorge USP (2) et au moins une cellule de mesure (23) intégrée dans la gorge USP.

2. Dispositif selon la revendication 1,
**caractérisé en ce que**
la au moins une cellule de mesure destinée à réaliser le procédé de diffraction au laser et la technique utilisant la diffusion de la lumière, comprend au moins une fenêtre d'entrée (21) destinée à faire pénétrer un faisceau lumineux d'une source de lumière et au moins une fenêtre de sortie (22) destinée à faire sortir la lumière diffusée du faisceau lumineux.

3. Dispositif selon la revendication 2,
**caractérisé en ce que**
la au moins une fenêtre d'entrée (21) est disposée en étant basculée par rapport aux faisceaux lumineux incidents de la source de lumière.

4. Dispositif selon la revendication 2 ou 3,
**caractérisé en ce que**
la au moins une fenêtre de sortie (22) est disposée en étant basculée par rapport aux faisceaux lumineux sortant.

5. Dispositif selon l'une quelconque des revendications 2 à 4,
**caractérisé en ce que**
la au moins une fenêtre d'entrée (21) et la au moins une fenêtre de sortie (22) sont disposées en étant basculées par rapport aux faisceaux lumineux incidents selon le même angle -mais de façon opposée.

6. Dispositif selon l'une quelconque des revendications 2 à 5,
**caractérisé en ce que**
la au moins une fenêtre d'entrée (21) et/ou la au moins une fenêtre de sortie (22) sont conçues de façon démontable.

7. Dispositif selon l'une quelconque des revendications 2 à 6,
**caractérisé en ce que**
la au moins une fenêtre d'entrée (21) et la au moins une fenêtre de sortie (22) sont conçues en étant minces et présentent notamment une épaisseur inférieure à 2 mm.

8. Dispositif selon l'une quelconque des revendications 2 à 7,
**caractérisé en ce que**
la au moins une fenêtre d'entrée (21) et la au moins une fenêtre de sortie (22) sont disposées de manière opposée.
